# EUROPÄISCHE PATENTSCHRIFT

(11) **EP 2 609 045 B1**
(45) Veröffentlichungstag und Bekanntmachung des Hinweises auf die Patenterteilung: **10.09.2014**
(21) Anmeldenummer: 11740602.5
(22) Anmeldetag: 19.07.2011
(51) Int. Cl.: C03B 33/095

(54) **GLASROHRABLÄNGVERFAHREN UND -VORRICHTUNG**
METHOD AND DEVICE FOR CUTTING A GLASS TUBE TO LENGTH
PROCÉDÉ ET DISPOSITIF DE DÉCOUPE DE TUBES DE VERRE

(30) Priorität: 27.08.2010 DE 102010035673
(43) Veröffentlichungstag der Anmeldung: 03.07.2013
(73) Patentinhaber: AMBEG Dr. J. Dichter GmbH, 10829 Berlin (DE)
(72) Erfinder: LANGER, Matthias, 12355 Berlin (DE)
(74) Vertreter: Grünecker, Kinkeldey, Stockmair & Schwanhäusser
(86) Internationale Anmeldenummer: PCT/EP2011/062376
(87) Internationale Veröffentlichungsnummer: WO 2012/025309

(56) Entgegenhaltungen:
- DE-A1- 4 411 037
- DE-B3-102005 021 548
- JP-A- 1 079 031
- JP-A- 6 219 761
- US-A1- 2009 126 403

## Beschreibung

Die vorliegende Erfindung betrifft ein Verfahren zum Ablängen eines Glasrohrabschnittes, insbesondere zur Herstellung von Arzneimittelverpackungen für die pharmazeutische Industrie, wobei entlang einer Umfangslinie eines Glasrohres durch Erwärmen eine Spannungszone zwischen dem abzulängenden Glasrohrabschnitt und dem Glasrohr erzeugt und anschließend zumindest die Spannungszone abgekühlt wird, wodurch sich ein Trennriss in der Spannungszone ausbildet, wobei eine radiale Eindringtiefe der Spannungszone geringer als die Glasrohrwandstärke ist, wodurch der Trennriss eine entlang der Umfangslinie verlaufende Sollbruchstelle zum Ablängen des Glasrohrabschnittes bildet und wobei nach dem Abkühlen der Glasrohrabschnitt entlang des Trennrisses bzw. der Sollbruchstelle vom Glasrohr abgebrochen wird.

Des Weiteren betrifft die Erfindung eine Vorrichtung zum Ablängen eines Glasrohrabschnitts, mit einer Erwärmungseinrichtung zum Erzeugen einer Spannungszone entlang einer Umfangslinie eines Glasrohres zwischen dem abzulängenden Glasrohrabschnitt und dem Glasrohr durch Erwärmen, mit einer Kühleinrichtung zum Abkühlen der Spannungszone, wobei die Vorrichtung ausgebildet ist, eine radiale Eindringtiefe der Spannungszone zu erzeugen, die geringer als die Glasrohrwandstärke ist, und mit einer Trenneinrichtung zum Abbrechen des abzulängenden Glasrohrabschnitts.

Verfahren und Vorrichtungen zum Ablängen bzw. Trennen von Glasrohren oder rohrförmigen Glasgebilden sind aus dem Stand der Technik bekannt. So sind zum Beispiel aus der Druckschrift DE 44 11 037 C2 ein Verfahren und eine dazu vorgesehene Vorrichtung zum Schneiden von Hohlglas bzw. zum Abtrennen einer Glaskappe von einem Trinkglas bekannt. Hier wird auf der Umfangslinie des Hohlglases mit Hilfe eines Laserstrahls eine Spannungszone erzeugt, in welcher sich beim anschließenden Abkühlen ausgehend von einem vorher mechanisch eingebrachten Initialriss ein Trennriss ausbreitet und die Glaskappe abgetrennt wird. Bei diesen sogenannten Thermoschock-Trennverfahren können Trennflächen hoher Planarität und Oberflächengüte erzeugt werden.

Bei dem vorgenannten bekannten Thermoschock-Trennverfahren besteht der Nachteil, dass es nicht zufriedenstellend bei Gläsern zur Herstellung von Arzneimittelverpackungen für die pharmazeutische Industrie, wie beispielsweise Bohrsilikat- oder Kalk-Soda-Gläsern funktioniert. So weisen derartige Gläser andere thermische und mechanische Eigenschaften als in der Druckschrift DE 44 11 037 C2 betrachtete Trinkgläser auf. Die in der pharmazeutischen Industrie verwendeten Gläser besitzen zum Beispiel geringere thermische Ausdehnungskoeffizienten als die Gläser der Trinkglasindustrie. Außerdem müssen bei der Herstellung von Arzneimittelverpackungen Glasrohre getrennt und abgelängt werden, die sich in ihrem Durchmesser sowie ihrer Wandstärke stark voneinander unterscheiden. Bei Arzneimittelverpackungen werden oftmals kleine Glasrohrdurchmesser mit relativ großen Wandstärken verwendet, wohingegen in der Trinkglasindustrie überwiegend Gläser mit großen Durchmessern und geringen Wandstärken hergestellt werden.

Somit kann das aus dem Stand der Technik bekannte Thermo-Schock-Trennverfahren nicht oder nur unter sehr langen Taktzeiten prozessstabil für Arzneimittelverpackungen angewandt werden.

Folglich liegt der vorliegenden Erfindung die Aufgabe zugrunde, ein Verfahren sowie eine Vorrichtung zum Ablängen von in der pharmazeutischen Industrie verwendeten Glasrohren bereitzustellen, das eine zufriedenstellende Prozessstabilität und geeignete Taktzeiten ermöglicht.

Beim eingangs genannten Verfahren wird diese Aufgabe dadurch gelöst, dass beim Abbrechen sowohl ein Biegemoment als auch eine vom Glasrohr weggerichtete axiale Zugkraft in den Glasrohrabschnitt eingeleitet werden.

Bei der eingangs genannten Vorrichtung wird die Aufgabe dadurch gelöst, dass die Trenneinrichtung ausgebildet ist, beim Abbrechen sowohl ein Biegemoment als auch eine vom Glasrohr weg gerichtete axiale Zugkraft in den Glasrohrabschnitt einzuleiten.

Die erfindungsgemäße Lösung hat den Vorteil, dass der Trennriss nur in einem äußersten Randbereich des Glases erzeugt wird und daher eine sehr saubere und kontrollierbare vollständige Abtrennung des Glasrohrabschnittes vom Glasrohr ermöglicht. Zudem kann der Glasrohrabschnitt nach dem Abkühlen in einem möglichst spannungsarmen bzw. spannungslosen Zustand vollständig abgetrennt werden.

Das Abbrechen kann beispielsweise durch eine mechanische Brecheinrichtung einer erfindungsgemäßen Vorrichtung vorgenommen werden. Somit kann der Glasrohrabschnitt unter einer möglichst geringen Prozessdauer schnell vom Glasrohr abgetrennt werden. Neben einem mechanischen Abbrechen können auch andere Abbrech- bzw. Trennverfahren in Betracht gezogen werden, wie beispielsweise ein Abschneiden oder -sprengen mittels weiterer thermischer und/oder mechanischer Trennverfahren.

So kann beispielsweise bei einem nicht rotierenden das Glasrohr aufnehmenden Spannfutter das Glasrohr mit einer Abbrecheinrichtung an der Trennstelle abgebrochen und einer Weiterverarbeitungslinie zugeführt werden. Aufgrund der nach dem Abkühlen weitgehend eliminierten Spannungszone kann eine sehr gute Kantenqualität und Rechtwinkligkeit der Trennstelle erreicht werden. Durch die vom Glasrohr weggerichtete axiale Zugkraft kann vermieden werden, dass der abgebrochene Glasrohrabschnitt nach dem Abbrechen mit dem im Spannfutter verbleibenden Glasrohr kollidiert.

Da im erfindungsgemäßen Verfahren die thermischen Spannungen beim endgültigen Abtrennen weitestgehend abgebaut sind, können Kanten höherer Qualität erzeugt werden, die weniger Nachbearbeitung erfordern und somit kürzere Prozess- bzw. Taktzeiten als Verfahren gemäß dem Stand der Technik ermöglichen. Beispielsweise erfolgt die Abtrennung beim aus der DE 44 11 037 C2 beschriebenen Stand der Technik bekannten Verfahren gleichzeitig mit dem Auftreten der größten thermischen Spannungen, was die Kantenqualität an der Trennstelle nachteilig beeinflussen kann.

Des Weiteren lassen sich die Taktzeiten mit dem erfindungsgemäßen Verfahren gegenüber dem aus der DE 44 11 037 C2 bekannten Verfahren verkürzen, weil im Gegensatz zur Lehre der DE 44 11 037 C2 bei der Erwärmung nicht die gesamte Glasrohrwand durchdrungen werden muss, was für ein sofortiges Abtrennen des Glasrohres beim Abkühlen erforderlich ist.

Die erfindungsgemäße Lösung kann durch die folgenden weiteren, jeweils für sich vorteilhaften Ausführungsformen beliebig ergänzt und weiter verbessert werden:

So kann gemäß einer ersten vorteilhaften Ausführungsform eines erfindungsgemäßen Verfahrens die entlang der Umfangslinie verlaufende Sollbruchstelle zum sauberen und präzisen Trennen des Glasrohrabschnittes gebildet werden, indem eine vorbestimmte Eindringtiefe der Spannungszone geringer als 50 % der Glasrohrwandstärke ist. Vorteilhafterweise kann die Eindringtiefe der Spannungszone geringer als 30 % der Glasrohrwandstärke sein. Insbesondere kann es von Vorteil sein, wenn die Eindringtiefe der Spannungszone ca. 20 % der Glasrohrwandstärke beträgt.

Gemäß einer weiteren vorteilhaften Ausführungsform eines erfindungsgemäßen Verfahrens kann das Erwärmen mittels eines Lasers erfolgen, dessen Strahldurchmesser zumindest in einem Auftreffbereich des Lasers auf einer äußeren Glasrohroberfläche weniger als 2 mm beträgt. Der Strahldurchmesser des Lasers kann vorteilhafterweise weniger als 1 mm betragen. Es ist insbesondere von Vorteil, wenn der Strahldurchmesser zumindest im Auftreffbereich ca. 0,5 mm beträgt. Somit kann möglichst gezielt eine Spannungszone mit vorbestimmter Eindringtiefe erzeugt werden, die geringer als die Glasrohrwandstärke ist. Eine Ausdehnung der Spannungszone in Längsrichtung des Glasrohres kann bei einem möglichst geringen Strahldurchmesser des Lasers minimiert werden. Dies begünstigt die Ausbildung eines möglichst sauber entlang der Umfangslinie verlaufenden Trennrisses als Sollbruchstelle, die ein möglichst riss- und splitterfreies vollständiges Abtrennen des Glasrohrabschnittes vom Glasrohr ermöglichen kann.

Zur möglichst präzisen Ausbildung der Spannungszone und des daraus resultierenden Trennrisses kann erfindungsgemäß vorgesehen sein, dass die Laserleistung für das Erwärmen weniger als 200 W, weniger als 100 W oder vorzugsweise ca. 20 W beträgt.

Zum präzisen Erwärmen des Glasrohres entlang der Umfangslinie kann erfindungsgemäß vorgesehen sein, dass das Glasrohr beim Erwärmen zumindest im Bereich der Spannungszone mit einer Umfangsgeschwindigkeit von weniger als 4 m/s, weniger als 2 m/s, weniger als 1 m/s oder vorzugsweise mit einer Umfangsgeschwindigkeit von ca. 0,15 m/s um seine Längsachse gedreht wird.

Gemäß einer weiteren vorteilhaften Ausführungsform eines erfindungsgemäßen Verfahrens kann vor dem Erwärmen ein auf der Umfangslinie liegender Initialriss in die Glasrohroberfläche eingebracht werden. Der Trennriss kann sich vorteilhafterweise vom vorgegebenen Initialriss gezielt ausbilden. Der Initialriss kann zur Ausbildung eines besonders sauberen Trennrisses beitragen, indem eine entlang der Umfangslinie gemessene Länge des Initialrisses kürzer als 0,1 mm sein kann. Vorteilhafterweise kann die entlang der Umfangslinie gemessene Länge des Initialrisses kürzer als 0,05 mm sein. Beispielsweise kann hierfür mit einer Anrissspitze, zum Beispiel aus Diamant, kurzzeitig mit geringer Kraft gegen das Glasrohr gedrückt werden, so dass der Initialriss durch eine Verletzung der Glasrohroberfläche ausgebildet wird.

Der Initialriss lässt sich gemäß einer weiteren vorteilhaften Ausführungsform des erfindungsgemäßen Verfahrens besonders präzise ausformen, wenn vorgesehen ist, dass der Initialriss durch ein radiales Eindrücken der Glasrohroberfläche mittels einer Anrissspitze gesetzt wird, die relativ zur Umfangsrichtung des Glasrohres ortsfest verfahren wird. So kann beispielsweise vorgesehen sein, dass das Glasrohr beim Einbringen des Initialrisses nicht um seine Längsachse gedreht wird, indem beispielsweise das Spannfutter angehalten ist bzw. stillsteht.

Im Folgenden ist die Erfindung anhand mehrerer Ausführungsformen mit Bezug auf die beigefügten Zeichnungen beispielhaft näher erläutert. Die Ausführungsformen stellen lediglich mögliche Ausgestaltungen dar, bei denen einzelne Merkmale, wie oben beschrieben ist, unabhängig voneinander realisiert und weggelassen werden können. In der Beschreibung der Ausführungsformen sind der Einfachheit halber gleiche Merkmale und Elemente mit gleichen Bezugszeichen versehen.

Es zeigen:
- Fig. 1: eine schematische Draufsicht auf eine erfindungsgemäße Glasablängvorrichtung;
- Fig. 2: eine schematische Seitenansicht eines erfindungsgemäß mit einem Trennriss als Sollbruchstelle versehenen Glasrohres;
- Fig. 3: eine schematische Querschnittsansicht eines erfindungsgemäß mit einem Initialriss versehenen Glasrohres entlang einer Umfangslinie vor Ausbildung des Trennrisses; und
- Fig. 4: eine schematische Querschnittsansicht des in Fig. 3 dargestellten Glasrohres nach Ausbildung des Trennrisses.

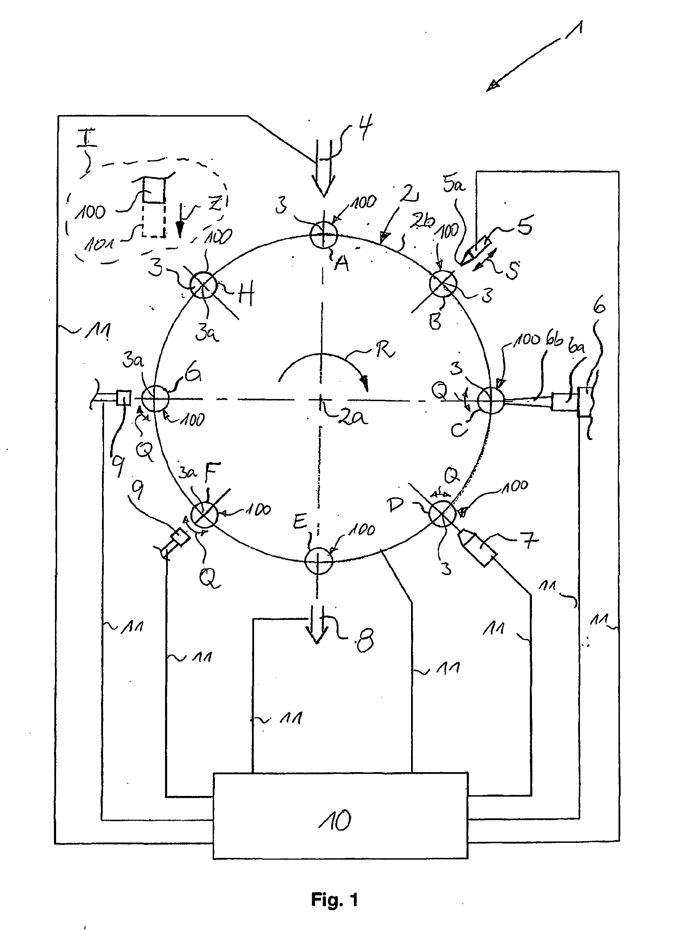

Zunächst ist eine erfindungsgemäße Ablängvorrichtung 1 anhand der Fig. 1 beschrieben, welche die Ablängvorrichtung 1 in einer schematischen Draufsicht zeigt. Die Ablängvorrichtung 1 umfasst einen Rundschalttisch 2, der um eine Drehachse 2a drehbar ausgestaltet ist und eine Reihe äquidistant entlang seines Umfanges 2b verteilter Spannfutter 3 aufweist, in denen jeweils ein Glasrohr 100 gehalten sein kann. Die Spannfutter 3 sind jeweils um ihre parallel zur Betrachtungsrichtung von Fig. 1 verlaufenden Rotationsachse 3a in einer Rotationsrichtung Q der Spannfutter 3 rotierbar ausgestaltet.

Der Rundschalttisch 2 ist beispielsweise in einer Drehrichtung R mit dem Uhrzeigersinn drehbar ausgestaltet. Je nach ihrer diskreten Drehposition sind die Spannfutter 3 Arbeitsstationen A bis H zugeordnet. An den Arbeitsstationen A bis H können verschiedene Arbeitsschritte eines erfindungsgemäßen Verfahrens am Glasrohr 100 durchgeführt werden:
In der Arbeitsstation A kann eine Zuführeinrichtung 4, beispielsweise in Form eines mechanischen Greifers, ein neues Glasrohr zuführen. In anderen Worten wird an der ersten Arbeitsstation A die Ablängvorrichtung 1 von der Zuführeinrichtung 4 mit Glasrohren 100 beschickt. Nach dem Ablängen von Glasrohrabschnitten (hier noch nicht gezeigt) vom Glasrohr 100 können Endstücke (nicht gezeigt) der Glasrohre 100, die sich nicht zum weiteren Ablängen eignen, an der ersten Arbeitsstation A ausgeworfen werden. Der Auswurf kann aber auch in einer anderen Arbeitsstation A bis H vollzogen werden.

In der zweiten Arbeitsstation B kann eine Anrissvorrichtung 5 der Ablängvorrichtung 1 einen Initialriss (hier noch nicht gezeigt) im Glasrohr 100 setzen. Die Anrisseinrichtung 5 kann in einer Bewegungsrichtung S zum Kreisumfang 2b des Rundschalttisches 2 radial beweglich ausgestaltet sein. Die Anrisseinrichtung 5 kann eine Anrissspitze 5a, zum Beispiel aus Diamant, umfassen, die mit kontrolliert geringer Kraft entlang der Bewegungsrichtung S gegen das Glasrohr gedrückt und anschließend entlang der Bewegungsrichtung S vom Glasrohr weg bewegt wird, um den Initialriss (hier noch nicht gezeigt) zu setzen.

Der dritten Arbeitsstation C kann eine Erwärmungseinrichtung 6 zugeordnet sein. Die Erwärmungseinrichtung 6 kann einen Laser umfassen, der eine Fokussiereinrichtung 6a in Form eines Fokuskopfes zum Fokussieren eines Laserstrahls 6b aufweisen kann. Beispielsweise kann die Erwärmungseinrichtung 6 in Form eines CO₂-Lasers mit einer Wellenlänge von ca. 10,6 µm ausgestaltet sein.

Mit Hilfe der Erwärmungseinrichtung 6 kann eine Spannungszone an der Umfangslinie des an der Arbeitsstation C im Spannfutter 3 rotierenden Glasrohres 100 eingebracht werden. Das Einbringen der Spannungszone kann durch Erwärmen nur einer äußeren Wandstärke des Glasrohres 100 auf eine Temperatur deutlich unterhalb der Transformationstemperatur des jeweiligen Glaswerkstoffes hervorgerufen werden.

Durch eine Einwirktiefe der Spannungszone, die geringer als eine Gesamtwandstärke des Glasrohres 100 ist, kommt es in der gemäß diesem Ausführungsbeispiel auf die dritte Arbeitsstation C folgenden Arbeitsstation D beim Abkühlen der Spannungszone nicht zu einem sofortigen Abtrennen des Glasrohrabschnittes. Da das eigentlich Abtrennen des Glasrohrabschnittes nach dem Abkühlen in einem noch späteren Arbeitsschritt erfolgt, kann ein erfindungsgemäßes Ablängverfahren eine sehr gute Kantenqualität durch spannungsarme Trennung ermöglichen. In anderen Worten wird die hohe Kantenqualität durch eine Aufteilung der Schritte des Kühlens und Trennens erreicht.

Eine im Verhältnis zur Gesamtwandstärke des Glasrohres 100 nur geringe Eindringtiefe der Spannungszone wird in der vorliegenden Ausführungsform durch eine relativ kurze Einwirkzeit mit einem leicht defokussierten Laserstrahl 6b mit einem Strahldurchmesser von ca. 0,5 mm erreicht. Beim Bestrahlen wird mit einer relativ geringen Laserleistung von ca. 20 W bei einer Umfangsgeschwindigkeit des Glasrohres 100 im rotierenden Spannfutter 3 von 0,5 m/s eine Spannungszone erzeugt, die sich gemäß dem vorliegenden Ausführungsbeispiel bis zu einer Tiefe von ca. 20 % der Glasrohrwandstärke ausdehnt.

In der vierten Arbeitsstation D wird das Glasrohr 100 mittels einer Kühleinrichtung 7 möglichst schnell bzw. schlagartig abgekühlt. Die Kühleinrichtung 7 kann beispielsweise als Wassersprühdüse ausgestaltet sein, mit deren Hilfe die Spannungszone des im rotierenden Spannfutter 3 gehaltenen Glasrohres 100 abgekühlt wird. Beim Abkühlen entsteht ausgehend vom Initialriss, also einer Initialverletzung der Glasrohroberfläche, ein um die Umfangslinie des Glasrohres 100 herum verlaufender Trennriss im Bereich der Spannungszone, da sich das zuvor erwärmte und ausgedehnte Glasmaterial innerhalb kurzer Zeit an der Glasrohroberfläche zusammenzieht. Aufgrund der nur im äußeren Bereich der Wandstärke des Glasrohres eingebrachten Spannungszone erfolgt die Ausdehnung des als Spannungsriss umlaufenden Trennrisses ausgehend von den Zugspannungen an der Glasrohroberfläche ebenfalls nur bis eine Tiefe von ca. 20 % der Wandstärke in diesem Ausführungsbeispiel.

Nach der Ausbildung des Trennrisses hat ein weiteres Abkühlen des Glasrohres 100 in der vierten Arbeitsstation D in der Regel keinen zusätzlichen Einfluss auf die Ausprägung des Risses, kann aber zum Ausgleichen von Temperaturunterschieden im Bereich des Trennrisses und damit zum Abbau der Spannungszone genutzt werden.

In der fünften Station E kann der abzulängende Glasrohrabschnitt durch eine Trenneinrichtung 8 vom Glasrohr am Trennriss abgetrennt und einer Weiterverarbeitungslinie (nicht gezeigt) zugeführt werden. Die Trenneinrichtung 8 kann beispielsweise eine mechanische Abbrecheinrichtung umfassen bzw. als eine solche ausgestaltet sein. So kann die Trenneinrichtung 8 beispielsweise über einen mechanischen Greifer verfügen, der den abzutrennenden Glasrohrabschnitt greifen und unter Erzeugung eines Biegemomentes an der Trennstelle abbrechen und möglichst gleichzeitig in einer axialen Richtung des Glasrohres 100 gezielt vom Glasrohr 100 weg führen kann.

In der sechsten Arbeitsstation F und siebten Arbeitsstation G kann eine Trennkante am Glasrohr 100 jeweils mit Hilfe einer Kantenbearbeitungseinrichtung 9 geglättet werden. So kann die Kantenbearbeitungseinrichtung 9 beispielsweise einen Gasbrenner umfassen oder als solcher ausgestaltet sein. Mit Hilfe eines Gasbrenners kann die abgetrennte Kante des Glasrohres 100 verschmolzen werden. Ein Verschmelzen der Kante kann beispielsweise ein Absplittern der Kante in nachfolgenden Arbeitsstationen verhindern.

In der achten Arbeitsstation H kann das verbleibende Glasrohr 100 auf eine neue abzutrennende Länge justiert bzw. ein zum Ablängen vorgesehener Glasrohrabschnitt eingestellt werden. Zum Justieren kann das Spannfutter 3 in der Arbeitsstation H kurzfristig geöffnet werden, so dass das Glasrohr 100 aufgrund der Schwerkraft auf einen Anschlag fällt, wie in Fig. 1 im Detail I in einer schematischen Seitenansicht des Glasrohres 100 dargestellt ist. Der Anschlag kann zum Beispiel parallel zur Schwerkraft Z senkrecht verfahrbar ausgestaltet sein, um das Glasrohr durch Absenken wie gewünscht zu justieren. Nach dem Absenken kann das Spannfutter 3 in der Arbeitsstation H geschlossen werden. Somit kann eine neue Länge des abzutrennenden Glasrohrabschnitts für den nächsten Trennvorgang eingestellt werden.

Alternativ oder zusätzlich kann das Glasrohr 100 in der Arbeitsstation H beispielsweise durch Öffnen des Spannfutters ausgeworfen werden, wenn eine verbleibende Länge des Glasrohres 100 keinen weiteren Ablängvorgang zulässt.

Des Weiteren verfügt die Ablängvorrichtung 1 über eine Steuer- und/oder Antriebseinrichtung 10. Die Steuer- und/oder Antriebseinrichtung 10 kann eine Vielzahl von elektrischen, elektronischen, pneumatischen und/oder hydraulischen Antriebs- und Steuerorganen sowie -elementen beinhalten, um den Rundschalttisch 2, seine Spannfutter 3 sowie die Zuführeinrichtung 4, die Anrisseinrichtung 5, die Erwärmungseinrichtung 6, die Kühleinrichtung 7, die Trenneinrichtung 8 und die Kantenbearbeitungseinrichtung 9 zu steuern und anzutreiben. Die Steuer- und/oder Antriebseinrichtung 10 kann beispielsweise über Steuer-, Mess- und/oder Versorgungsleitungen 11 mit dem Rundschalttisch 2, den Spannfuttern 3 sowie der Zuführeinrichtung 4, der Anrisseinrichtung 5, der Erwärmungseinrichtung 6, der Kühleinrichtung 7, der Trenneinrichtung 8 und den Kantenbearbeitungseinrichtungen 9 verbunden sein. Die Steuer- und/oder Antriebseinrichtung 10 kann thermische, elektrische, mechanische, pneumatische und/oder hydraulische Energiequellen, Speicher- und/oder Steuerungselemente beinhalten, um die Ablängvorrichtung 1 zu steuern, darin ablaufende Verfahrensschritte zu regeln und die Einrichtungen 2 bis 9 der Ablängvorrichtung 1 mit Energie und Hilfsstoffen wie beispielsweise Wasser zu versorgen.

Die Steuer- und/oder Antriebseinrichtung 10 kann eine beliebige Anzahl und Anordnung zusammenwirkender elektronischer Steuerungs- und Anzeigeelemente, wie Displays, Schalter, Knöpfe, Regler, Leuchtmittel, Prozessoren, Datenspeichereinrichtungen, Datenspeicherwechseleinrichtungen und elektronischer Schnittstellen beinhalten, um die Ablängvorrichtung 1 zu einem erfindungsgemäßen Verfahren zu befähigen bzw. dazu abzustimmen.

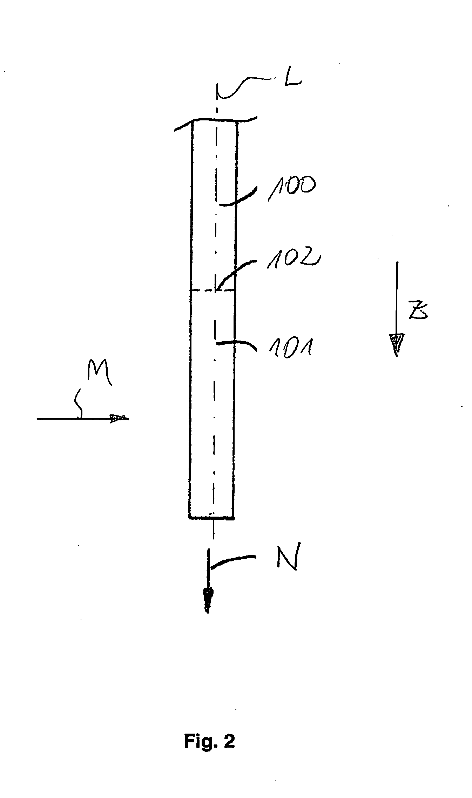

Fig. 2 zeigt das Glasrohr 100 in einer schematischen Seitenansicht. Zwischen dem Glasrohr 100 und dem abzutrennenden Glasrohrabschnitt 101 ist ein Trennriss 102 als umlaufende Sollbruchstelle ausgebildet. Mittels einer beispielsweise senkrecht zur Längsachse L des Glasrohres 100 verlaufenden Brechkraft M kann ein Biegemoment in den eine Trennstelle vorgegebenen Trennriss 102 eingeleitet werden, so dass der Glasrohrabschnitt 101 vom Glasrohr 100 abgebrochen wird. Zusätzlich zur Brechkraft M kann eine parallel zur Längsachse L verlaufende Zugkraft N in dem Glasrohrabschnitt 101 eingeleitet werden. Die Zugkraft N kann beispielsweise parallel zur Schwerkraft Z verlaufen und ein möglichst splitterfreies Abtrennen des Glasrohrabschnittes 101 vom Glasrohr 100 zu ermöglichen.

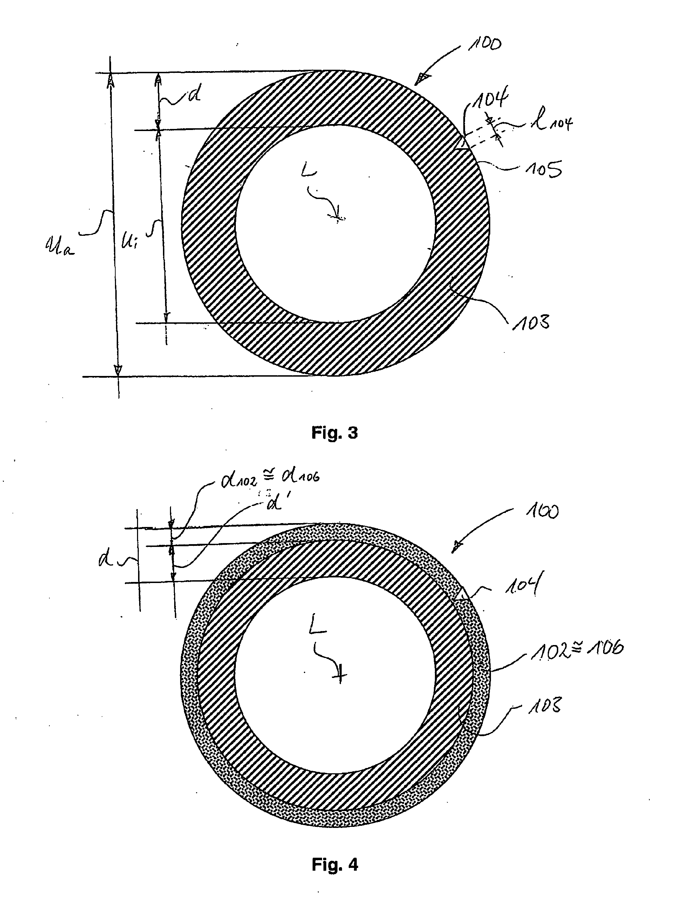

Fig. 3 zeigt das Glasrohr 100 in einer schematischen Querschnittsansicht in Höhe der Trennstelle 102 bzw. in Höhe der zum Ablängen des Glasrohrabschnittes 101 vorgesehenen Umfangslinie 103. Das Glasrohr 100 weist einen Innendurchmesser Uᵢ, einen Außendurchmesser Uₐ und eine Wandstärke d auf. Des Weiteren ist in Fig. 3 ersichtlich, dass ein Initialriss 104 in einer Außen- bzw. Mantelfläche 105 des Glasrohres 100 eingebracht ist. Der Initialriss 104 hat eine Länge l₁₀₄, die tangential zur Umfangslinie 103 gemessen ist.

Fig. 4 zeigt das Glasrohr 100 in einem Zustand, in dem sich der Trennriss 102 in der Wandung des Glasrohres 100 ausgebildet hat. Der Trennriss 102 dringt mit einer radial gemessenen Trennrisstiefe d₁₀₂ in die Wandung des Glasrohres 100 ein. Von der Wandstärke d in Höhe der Umfangslinie 103 verbleibt eine Restwandstärke d' zum Abtrennen des Glasrohrabschnittes 101.

Die Trennrisstiefe d₁₀₂ entspricht im Wesentlichen einer Tiefe d₁₀₆ der zuvor erzeugten und durch schlagartiges Abkühlen aufgerissenen Spannungszone 106. Im vorliegenden Ausführungsbeispiel ist die Spannungszone 106 und folglich der Trennriss 102 so ausgebildet, dass die Tiefe d₁₀₂ des Trennrisses 102 ca. 20 % der Wandstärke D des Glasrohres 100 beträgt.

Im Rahmen des Erfindungsgedankens sind Abweichungen von den oben beschriebenen Ausführungsbeispielen möglich:
So kann beispielsweise sowohl das Erwärmen als auch das Abkühlen an der dritten Arbeitsstation vorgenommen werden. Dazu kann zum Beispiel die Erwärmungseinrichtung 6 und die Kühleinrichtung 7 an der Arbeitsstation C angeordnet sein. Es kann eine den jeweiligen Anforderungen entsprechende Anzahl von Zuführeinrichtungen 4, Anrisseinrichtungen 5, Erwärmungseinrichtungen 6, Kühleinrichtungen 7, Trenneinrichtungen 8 und Kantenbearbeitungseinrichtungen 9 an den Arbeitsstationen A bis H angeordnet sein, um ein möglichst prozessstabiles Abtrennen des Glasrohrabschnittes 101 vom Glasrohr 100 unter möglichst geringen Taktzeiten durchzuführen.

Es ist nicht zwingend erforderlich, dass die Ablängvorrichtung 1 einen Rundschalttisch 2 umfasst, um das Glasrohr 100 in den Arbeitsstationen A bis H zu positionieren. Es sind auch andere, beispielsweise lineare Prozessanordnungen, denkbar.

Die Tiefe d₁₀₆ der Spannungszone 106 bzw. des Trennrisses d₁₀₂ kann den jeweiligen physikalischen Eigenschaften des zu trennenden Glaswerkstoffes und den Abmaßen Uₐ, Uᵢ und d des Glasrohres 100 entsprechend gewählt werden, um ein zufriedenstellendes Abtrennen des Glasrohrabschnittes 101 zu gewährleisten.

## Patentansprüche

1. Verfahren zum Ablängen eines Glasrohrabschnittes (101), wobei entlang einer Umfangslinie (103) eines Glasrohres (100) durch Erwärmen eine Spannungszone (106) zwischen dem abzulängenden Glasrohrabschnitt (101) und dem Glasrohr (100) erzeugt und anschließend zumindest die Spannungszone (106) abgekühlt wird, wodurch sich ein Trennriss (102) in der Spannungszone (106) ausbildet, wobei eine radiale Eindringtiefe (d₁₀₆) der Spannungszone (106) geringer als die Glasrohrwandstärke (d) ist, wodurch der Trennriss (102) eine entlang der Umfangslinie (103) verlaufende Sollbruchstelle zum Ablängen des Glasrohrabschnittes (101) bildet, und wobei nach dem Abkühlen der Glasrohrabschnitt (101) entlang der Sollbruchstelle vom Glasrohr (100) abgebrochen wird, **dadurch gekennzeichnet, dass** beim Abbrechen sowohl ein Biegemoment (M) als auch eine vom Glasrohr (100) weg gerichtete axiale Zugkraft (N) in den Glasrohrabschnitt (101) eingeleitet werden.

2. Verfahren nach Anspruch 1, **dadurch gekennzeichnet, dass** die Eindringtiefe (d₁₀₆) der Spannungszone (106) geringer als 50% der Glasrohrwandstärke (d) ist.

3. Verfahren nach einem der Ansprüche 1 oder 2, **dadurch gekennzeichnet, dass** die Eindringtiefe (d₁₀₆) der Spannungszone (106) ca. 20% der Glasrohrwandstärke (d) beträgt.

4. Verfahren nach einem der Ansprüche 1 bis 3, **dadurch gekennzeichnet, dass** das Erwärmen mittels eines Laserstrahls (6b) erfolgt, dessen Strahldurchmesser zumindest in einem Auftreffbereich des Laserstrahls (6b) auf einer äußeren Glasrohroberfläche (105) weniger als 2 mm beträgt.

5. Verfahren nach Anspruch 4, **dadurch gekennzeichnet, dass** der Strahldurchmesser zumindest im Auftreffbereich ca. 0,5 mm beträgt.

6. Verfahren nach einem der Ansprüche 4 oder 5, **dadurch gekennzeichnet, dass** die Laserleistung für das Erwärmen weniger als 200 W, vorzugsweise 20 W, beträgt.

7. Verfahren nach einem der Ansprüche 1 bis 6, **dadurch gekennzeichnet, dass** das Glasrohr (100) beim Erwärmen zumindest im Bereich der Spannungszone (106) mit einer Umfangsgeschwindigkeit von weniger als 4 m/s um seine Längsachse (L) gedreht wird.

8. Verfahren nach einem der Ansprüche 1 bis 7, **dadurch gekennzeichnet, dass** das Glasrohr (100) beim Erwärmen zumindest im Bereich der Spannungszone (106) mit einer Umfangsgeschwindigkeit von ca. 0,15 m/s um seine Längsachse (L) gedreht wird.

9. Verfahren nach einem der Ansprüche 1 bis 8, **dadurch gekennzeichnet, dass** vor dem Erwärmen ein auf der Umfangslinie (103) liegender initialriss (104) in die Glasrohroberfläche (105) eingebracht wird.

10. Verfahren nach Anspruch 9, **dadurch gekennzeichnet, dass** eine entlang der Umfangslinie (103) gemessene Länge (I₁₀₄) des Initialrisses (104) kürzer als 0,1 mm ist.

11. Verfahren nach Anspruch 9 oder 10, **dadurch gekennzeichnet, dass** der Initialriss (104) durch ein radiales Eindrücken der Glasrohroberfläche (105) mittels einer Anrissspitze (5a) gesetzt wird, die relativ zu einer Umfangsrichtung des Glasrohres (100) ortsfest verfahren wird.

12. Verfahren nach einem der Ansprüche 9 bis 11, **dadurch gekennzeichnet, dass** das Glasrohr (100) beim Einbringen des Initialrisses (104) nicht um seine Längsachse (L) gedreht wird.

13. Vorrichtung (1) zum Ablängen eines Glasrohrabschnittes (101), mit einer Erwärmungseinrichtung (6) zum Erzeugen einer Spannungszone (106) entlang einer Umfangslinie (103) eines Glasrohres (100) zwischen dem abzulängenden Glasrohrabschnitt (101) und dem Glasrohr (100) durch Erwärmen, mit einer Kühleinrichtung (7) zum Abkühlen der Spannungszone (106), wobei die Vorrichtung (1) ausgebildet ist, eine radiale Eindringtiefe (d₁₀₆) der Spannungszone (106) zu erzeugen, die geringer als die Glasrohrwandstärke (d) ist, und mit einer Trenneinrichtung (8) zum Abbrechen des abzulängenden Glasrohrabschnitts (101), **dadurch gekennzeichnet, dass** die Trenneinrichtung (8) ausgebildet ist, beim Abbrechen sowohl ein Biegemoment (M) als auch eine vom Glasrohr (100) weg gerichtete axiale Zugkraft (N) in den Glasrohrabschnitt (101) einzuleiten.

## Claims

1. Method of cutting a glass tube section (101) to length, wherein a tension zone (106) is created along a circumferential line (103) of a glass tube (100) between the glass tube section (101) to be cut to length and the glass tube (100) by heating, after which at least the tension zone (106) is cooled, as a result of which a separation crack (102) forms in the tension zone (106), wherein a radial penetration depth (d₁₀₆) of the tension zone (106) is smaller than the glass tube wall thickness (d), wherein the separation crack (102) constitutes a predetermined breaking point along the circumferential line (103) for cutting the glass tube section (101) to length, and wherein after cooling, the glass tube section (101) is severed from the glass tube (100) along the predetermined breaking point, **characterised in that** both a bending moment (M) and an axial tensile force (N) directed away from the glass tube (100) are transferred to the glass tube section (101) during severing.

2. Method according to claim 1, **characterised in that** the penetration depth (d₁₀₆) of the tension zone (106) is smaller than 50% of the glass tube wall thickness (d).

3. Method according to one of claims 1 or 2, **characterised in that** the penetration depth (d₁₀₆) of the tension zone (106) amounts to ca. 20% of the glass tube wall thickness (d).

4. Method according to one of claims 1 to 3, **characterised in that** heating is effected by means of a laser beam (6b), the beam diameter of which is less than 2 mm at least in an impact region of the laser beam (6b) on an external glass tube surface (105).

5. Method according to claim 4, **characterised in that** the beam diameter amounts to ca. 0.5 mm at least in the impact region.

6. Method according to one of claims 4 or 5, **characterised in that** the laser power for heating amounts to less than 200 W, preferably 20 W.

7. Method according to one of claims 1 to 6, **characterised in that** the glass tube (100) is rotated about its longitudinal axis (L) at a circumferential speed of less than 4 m/s in at least the region of the tension zone (106) during heating.

8. Method according to one of claims 1 to 7, **characterised in that** the glass tube (100) is rotated about its longitudinal axis (L) at a circumferential speed of approximately 0.15 m/s in at least the region of the tension zone (106) during heating.

9. Method according to one of claims 1 to 8, **characterised in that** an initial crack (104) lying on the circumferential line (103) is produced in the glass tube surface (105) prior to heating.

10. Method according to claim 9, **characterised in that** a length (l₁₀₄) of the initial crack (104) measured along the circumferential line (103) is shorter than 0.1 mm.

11. Method according to claim 9 or 10, **characterised in that** the initial crack (104) is placed by radially indenting the glass tube surface (105) by means of an crack initiating tip (5a) which is moved stationary relative to a circumferential direction of the glass tube (100).

12. Method according to one of claims 9 to 11, **characterised in that** the glass tube (100) is not rotated about its longitudinal axis (L) as the initial crack (104) is being produced.

13. Device (1) for cutting a section of glass tube (101) to length, comprising a heating unit (6) for creating a tension zone (106) along a circumferential line (103) of a glass tube (100) between the glass tube section (101) to be cut to length and the glass tube (100) by heating, a cooling unit (7) for cooling the tension zone (106), the device (1) being configured to create a radial penetration depth (d₁₀₆) in the tension zone (106) that is smaller than the glass tube wall thickness (d), and having a separating unit (8) for severing the glass tubing section (101) to be cut to length, **characterised in that** the cutting unit (8) is configured to transfer to the glass tube section (101) both a bending moment (M) and an axial tensile force (N) directed away from the glass tube (100) during severing.

## Revendications

1. Procédé pour couper à longueur un tronçon de tube de verre (101),
selon lequel on engendre le long d'une ligne périphérique (103) d'un tube de verre (100), par chauffage, une zone de contraintes (106) entre le tronçon de tube de verre (101) à couper à longueur et le tube de verre (100), et l'on refroidit ensuite au moins la zone de contraintes (106), en conduisant ainsi à la formation d'une fissure de sectionnement (102) dans la zone de contraintes (106),
selon lequel une profondeur de pénétration radiale (d₁₀₆) de la zone de contraintes (106) est inférieure à l'épaisseur de paroi (d) du tube de verre, la fissure de sectionnement (102) formant ainsi une zone de rupture programmée s'étendant le long de la ligne périphérique (103), pour la coupe à longueur du tronçon de tube de verre (101),
et selon lequel, après le refroidissement, le tronçon de tube de verre (101) est sectionné du tube de verre (100), par rupture le long de la zone de rupture programmée,
**caractérisé en ce que** lors du sectionnement par rupture, on applique au tronçon de tube de verre (101), aussi bien un moment de flexion (M), qu'une force de traction axiale (N) orientée de manière à s'éloigner du tube de verre (100).

2. Procédé selon la revendication 1, **caractérisé en ce que** la profondeur de pénétration (d₁₀₆) de la zone de contraintes (106) est inférieure à 50% de l'épaisseur de paroi (d) du tube de verre.

3. Procédé selon l'une des revendications 1 ou 2, **caractérisé en ce que** la profondeur de pénétration (d₁₀₆) de la zone de contraintes (106) vaut environ 20% de l'épaisseur de paroi (d) du tube de verre.

4. Procédé selon l'une des revendications 1 à 3, **caractérisé en ce que** le chauffage est effectué au moyen d'un faisceau laser (6b), dont le diamètre de faisceau vaut moins de 2 mm, au moins dans une zone d'impact du faisceau laser (6b) sur une surface extérieure (105) du tube de verre.

5. Procédé selon la revendication 4, **caractérisé en ce que** le diamètre de faisceau vaut environ 0,5 mm, au moins dans la zone d'impact.

6. Procédé selon l'une des revendications 4 ou 5, **caractérisé en ce que** la puissance du laser pour le chauffage vaut moins de 2000 W, de préférence 20 W.

7. Procédé selon l'une des revendications 1 à 6, **caractérisé en ce que** le tube de verre (100), lors du chauffage, au moins dans la zone de contraintes (106), est mis en rotation autour de son axe longitudinal (L), avec une vitesse périphérique de moins de 4 m/s.

8. Procédé selon l'une des revendications 1 à 7, **caractérisé en ce que** le tube de verre (100), lors du chauffage, au moins dans la zone de contraintes (106), est mis en rotation autour de son axe longitudinal (L), avec une vitesse périphérique de moins de 0,15 m/s.

9. Procédé selon l'une des revendications 1 à 8, **caractérisé en ce qu'**avant le chauffage, on réalise dans la surface extérieure (105) du tube de verre, une fissure initiale d'amorçage (104) située sur la ligne périphérique (103).

10. Procédé selon la revendication 9, **caractérisé en ce qu'**une longueur (l₁₀₄) de la fissure initiale d'amorçage (104), mesurée le long de la ligne périphérique (103), est inférieure à 0,1 mm.

11. Procédé selon la revendication 9 ou la revendication 10, **caractérisé en ce que** la fissure initiale d'amorçage (104) est produite par enfoncement radial de la surface extérieure (105) du tube de verre au moyen d'une pointe de marquage (5a), que l'on déplace en position fixe par rapport à une direction périphérique du tube de verre (100).

12. Procédé selon l'une des revendications 9 à 11, **caractérisé en ce que** le tube de verre (100) n'est pas mis en rotation autour de son axe longitudinal (L), lors de la réalisation de la fissure initiale d'amorçage (104).

13. Installation (1) pour couper à longueur un tronçon de tube de verre (101), comprenant un dispositif de chauffage (6) pour engendrer, par chauffage, une zone de contraintes (106) le long d'une ligne périphérique (103) d'un tube de verre (100), entre le tronçon de tube de verre (101) à couper à longueur et le tube de verre (100), l'installation (1) comprenant également un dispositif de refroidissement (7) destiné à refroidir la zone de contraintes (106) et étant conçue pour produire une profondeur de pénétration radiale (d₁₀₆) de la zone de contraintes (106), qui est inférieure à l'épaisseur de paroi (d) du tube de verre, et l'installation comprenant également un dispositif de sectionnement (8) pour sectionner par rupture, le tronçon de tube de verre (101) à couper à longueur,
**caractérisée en ce que** le dispositif de sectionnement (8) est conçu de manière à appliquer au tronçon de tube de verre (101), lors du sectionnement par rupture, aussi bien un moment de flexion (M), qu'une force de traction axiale (N) orientée de manière à s'éloigner du tube de verre (100).
